(19) **Europäisches Patentamt**
**European Patent Office**
**Office européen des brevets**

(11)  **EP 2 067 020 B1**

(12)  # EUROPÄISCHE PATENTSCHRIFT

(45) Veröffentlichungstag und Bekanntmachung des Hinweises auf die Patenterteilung:
**30.05.2012 Patentblatt 2012/22**

(51) Int Cl.:
**G01N 21/64** *(2006.01)*  **G01N 21/62** *(2006.01)*
**G02B 21/00** *(2006.01)*

(21) Anmeldenummer: **07802252.2**

(22) Anmeldetag: **10.09.2007**

(86) Internationale Anmeldenummer:
**PCT/EP2007/007882**

(87) Internationale Veröffentlichungsnummer:
**WO 2008/040435 (10.04.2008 Gazette 2008/15)**

(54) **AUFLÖSUNGSGESTEIGERTE LUMINESZENZMIKROSKOPIE**

LUMINESCENCE MICROSCOPY WITH ENHANCED RESOLUTION

MICROSCOPIE À LUMINESCENCE À RÉSOLUTION AMÉLIORÉE

(72) Erfinder: **LIPPERT, Helmut**
**07743 Jena (DE)**

(74) Vertreter: **Breit, Ulrich**
**Geyer, Fehners & Partner Patentanwälte**
**Perhamerstrasse 31**
**80687 München (DE)**

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **29.09.2006 DE 102006046369**

(43) Veröffentlichungstag der Anmeldung:
**10.06.2009 Patentblatt 2009/24**

(73) Patentinhaber: **Carl Zeiss MicroImaging GmbH**
**07745 Jena (DE)**

(56) Entgegenhaltungen:
**WO-A-2005/029149    US-A- 5 814 820**
**US-A1- 2001 045 529    US-A1- 2002 109 101**
**US-A1- 2005 162 654**

**Beschreibung**

Die Erfindung bezieht sich auf die auflösungsgesteigerte Lumineszenzmikroskopie und insbesondere auf ein Verfahren, bei dem eine zu untersuchende lumineszierende Probe mit Anregungsstrahlung beleuchtet wird und ein Bild der zur Lumineszenz angeregten Probe gewonnen wird. Die Erfindung bezieht sich weiter auf ein Mikroskop zur auflösungsgesteigerten Lumineszenzmikroskopie einer Probe, das Mittel zur Anregung von Lumineszenz, die in der Probe Anregungsstrahlung einstrahlen, und Mittel zur Gewinnung eines Bildes der angeregten Probe aufweist.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagemden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergeben, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden.

In den letzten Jahren ist eine Vielzahl solcher Techniken vorgeschlagen bzw. entwickelt worden, die es erlauben, optische Mikroskopie, insbesondere mit LSM, mit einer Auflösung jenseits der klassischen Abbé'schen Beugungsgrenze zu betreiben [vgl. Y. Garini, B.J. Vermolen und I.T. Young, "From micro to nano: recent advances in high-resolution microscopy". Curr. Opin. Biotechnol. 16, 3-12 (2005)]. Dabei kann grundsätzlich zwischen Nah- und Femfeldmethoden unterschieden werden, wobei letztere wegen ihrer Anwendbarkeit für die dreidimensionale Abbildung im biomedizinischen Bereich von besonderem Interesse sind.

Um bei konventioneller Fluoreszenzmikroskopie mit gegebener numerischer Apertur (NA) und Anregungswellenlänge die Abbé-Grenze der übertragbaren Raumfrequenzen signifikant zu überschreiten, muß der erwähnte nichtlineare Zusammenhang zwischen der Intensität des anregenden und der des emittierten Lichts hergestellt werden [vgl. R. Heintzmann, T.M. Jovin und C. Cremer, "Saturated patterned excitation microscopy - a concept for optical resolution improvement", JOSA A 19, 1599-1609 (2002)]. Dies gelingt beispielsweise mittels Mehrphotonenmikroskopie [vgl. W. Denk, J.H. Strickler und W.W. Webb, "Two-photon fluorescence scanning microscopy, a concept for breaking the diffraction resolution limit ", Science 248, 73-76 (1990)].

Die US 5814820 beschreibt ein Lumineszenz-Mikroskopieverfahren, bei dem eine Probe mit einem Pump-Laserstrahl bestrahlt wird, die Moleküle in der Probe anregt. Ein weiterer Sonden-Laserstrahl dient dazu, in den angeregten Molekülen die Emission von Fluoreszenzstrahlung zu erzeugen. Die beiden Laserstrahlen haben unterschiedliche Wellenlängen. Die Pump-Laserstrahlung wird mit einer ersten Frequenz moduliert und die Sonden-Laserstrahlung mit einer zweiten Frequenz. Dadurch entsteht Fluoreszenzstrahlung, die ein Kreuzkorrelationssignal mit einer Frequenz hat, das dem Frequenzabstand zwischen der Modulation des Pump- und der Modulation des Sonden-Laserstrahls entspricht. Die beiden Strahlen werden in einem gemeinsamen Fokus fokussiert, überdecken sich also vollständig.

Die US 2001/0045529 A1 und die WO-A1-2006/ 016475 beschreiben Lumineszenz-Mikroskopieverfahren, bei dem zwei verschiedene Anregungsstrahlungsfelder verwendet werden, die sich in der Probe teilweise überdecken.

Andere Ansätze sind die von Hell et al. vorgeschlagenen Methoden des "Ground-State-Depletion" (GSD) [vgl. US 5866911 oder S.W. Hell und M. Kroug, "Ground-state-depletion fluorescence microscopy: a concept for breaking the diffraction resolution limit", Appl. Phys. B 60, 495-497 (1995)] oder des "Stimulated-Emission-Depletion" (STED) [vgl. DE 4416558 C2 S.W. Hell und J. Wichmann, "Breaking the diffraction resolution limit by stimulated emission: stimulated-emission-depletion fluorescence microscopy", Opt. Lett. 19, 780-782 (1994); T. A. Klar, E. Engel und S.W. Hell, "Breaking Abbe's diffraction resolution limit in fluorescence microscopy with stimulated emission depletion beams of various shapes", Phys. Rev. E 64, 066613 (2001); V. Westphal und S.W. Hell, "Nanoscale Resolution in the focal plane of an optical microscope", PRL 94, 143903 (2005)]. Das gemeinsame Prinzip beruht hier auf der Anwendung einer Anregungs- und einer Sättigungsintensitätsverteilung in der Probe, die jeweils so strukturiert sind, daß das Maximum der ersteren mit einem Intereferenzminimum der letzteren zusammenfällt. Eine gesättigte Anregung des Triplettzustands (im folgenden GSD) bzw. eine gesättigte Abregung des fluoreszierenden Zustands (im folgenden STED) ermöglicht das gezielte Löschen der Fluoreszenz von Molekülen, die nicht in unmittelbarer Nähe des Intereferenzminimum lokalisiert sind. Die Strahlung stammt dann nur aus dem Interferenzminimum. In ähnlicher Weise funktioniert auch die von Iketaki *et al.* etablierte "Up-Conversion-Fluorescence-Depletion"-Technik [vgl. T. Watanabe, Y. Iketaki, T. Omatsu, K. Yamamoto, M. Sakai und M. Fujii, "Two-point-separation in super-resolution fluorescence microscope based on up-conversion fluorescence depletion technique", Opt. Exp. 24, 3271-3276 (2003)].

Die DE 19908883 A1 schlägt als nichtlinearen Prozeß eine direkte Sättigung des Fluoreszenzübergangs vor. Die erhöhte Auflösung beruht dabei auf einer periodisch strukturierten Beleuchtung der Probe, wodurch ein Transfer hoher Objektraumfrequenzen in den Bereich der optischen Übertragungsfunktion des Mikroskops erfolgt. Der Transfer kann durch aufwendige rechnerische Nachbearbeitung der Daten erreicht werden.

Der Erfindung liegt deshalb die Aufgabe zugrunde, ein Lumineszenzmikroskopieverfahren bzw. ein Lumineszenzmikroskop anzugeben, das eine Auflösungssteigerung ohne Rückgriff auf mehrere Wellenlängen bzw. ohne aufwendige rechnerische Nachbearbeitung der Daten erreicht.

Diese Aufgabe wird erfindungsgemäß gelöst mit einem auflösungsgesteigerten Lumineszenz-Mikroskopieverfahren nach Anspruch 1, bei dem eine Probe durch Einstrahlung von Anregungsstrahlung zur Emission von Lumineszenzstrahlung angeregt wird und ein Bild der lumineszierenden Probe gewonnen wird, wobei in einem ersten Probenteilvolumen der Probe ein erstes Laserstrahlungsfeld der Anregungsstrahlung und in einem zweiten Probenteilvolumen der Probe ein zweites Laserstrahlungsfeld der Anregungsstrahlung eingestrahlt wird, wobei erstes und zweites Probenteilvolumen sich teilweise, aber nicht vollständig überlappen, nur das erste Laserstrahlungsfeld mit einer ersten Frequenz moduliert wird, Lumineszenzstrahlung aus dem ersten Probenteilvolumen modulationsfilternd detektiert wird, so daß Lumineszenzstrahlung aus dem zweiten Probenteilvolumen unterdrückt wird.

Die Aufgabe wird weitergelöst durch ein auflösungsgesteigertes Lumineszenzmikroskop nach Anspruch 8 mit Mitteln zum Einstrahlen von Anregungsstrahlung auf eine Probe zur Anregung der Emission von Lumineszenzstrahlung und Mittel zur Bildgewinnung der lumineszierenden Probe, wobei die Mittel zum Einstrahlen der Anregungsstrahlung Mittel zum Einstrahlen eines ersten Laserstrahlungsfelds in ein erstes Probenteilvolumen der Probe und Mittel zum Einstrahlen eines zweiten Laserstrahlungsfelds in ein zweites Probenteilvolumen der Probe aufweisen, wobei erstes und zweites Probenteilvolumen sich teilweise, aber nicht vollständig überlappen, die Mittel zum Einstrahlen des ersten Laserstrahlungsfeldes einen Modulator aufweisen, der das erste Laserstrahlungsfeld mit einer ersten Frequenz moduliert, die Mittel zur Bildgewinnung Lumineszenzstrahlung aus dem ersten Probenteilvolumen modulationsfilternd detektieren, so daß Lumineszenzstrahlung aus dem zweiten Probenteilvolumen durch die Filterung unterdrückt ist.

Das erfindungsgemäße Verfahren nach Anspruch 1 sowie die entsprechende Vorrichtung nach Anspruch 8 sind wie GSD oder STED den "Single-Point"-Techniken zuzuordnen, bei denen durch nichtlineare Zusammenwirkung mindestens zweier Laserstrahlungsfeldern eine Auflösungssteigerung über die Auflösung der Laserstrahlungsfeldeinstrahlung hinaus vollzogen wird. Als nichtlinearer Prozeß kann ähnlich wie bei DE 19908883 A1 eine direkte Sättigung des Fluoreszenzübergangs zur Anwendung kommen. Eine gleichzeitige Besetzung des Triplettzustands wirkt sich aber nun nicht mehr notwendigerweise negativ aus. Wesentlich ist, daß die durch Anregungs- und Sättigungslaser erzeugte Fluoreszenzen voneinander separiert werden, indem eine Modulationsmarkierung (MMF: "modulation-marked-fluorescence") und geeignete frequenz- und/oder phasensensitive Detektion vorgenommen wird.

Erfindungsgemäß werden also zwei Laserstrahlungsfelder zur Auflösungssteigerung eingestrahlt. Einer der beiden Laserstrahlungsfelder wird moduliert. Dieses Laserstrahlungsfeld wird nachfolgend als Zentralstrahl bzw. Zentralstrahlung oder Zentrallaserstrahlung bezeichnet. Dieses Laserstrahlungsfeld überlappend aber nicht vollständig überdeckend wird ein zweites Laserstrahlungsfeld eingestrahlt, dessen Strahlung nicht linear moduliert ist. Dieses Laserstrahlungsfeld wird hier nachfolgend als Seitenlaserstrahlung oder Seitenlaserstrahl angesprochen. Vorzugsweise werden die beiden Laserstrahlungsfelder so strukturiert, daß das Maximum des Zentrallaserstrahls mit dem Interferenzminimum des Seitenlaserstrahls zusammenfällt. Prinzipiell ist die Auflösung gegenüber der Auflösung, mit der Zentrallaserstrahl sowie Seitenlaserstrahl eingekoppelt werden, verbessert.

Der erfindungsgemäße Ansatz ist eine Weiterentwicklung der bekannten GSD- und STED-Verfahren. Er hat gegenüber diesen allerdings einige Vorteile, die hier kurz erwähnt seien sollen:

- GSD basiert auf einer Sättigung der Triplettbesetzung und erfordert daher Moleküle mit großer Intersystem-Crossing-Rate. Diese Einschränkung ist bei der modulationsmarkierten Fluoreszenz nicht gegeben, denn sowohl die Seitenlaserstrahl-$T_{1,0}$-Anregung als auch die Seitenlaserstrahl-$S_{1,0}$-Anregung wirken sich nicht auf das durch den Zentrallaserstrahl generierte Signal aus. In dem zuerst genannten Fall ergibt sich *keine* Fluorezenz, während in dem zuletzt genannten Fall *keine modulierte* Fluoreszenz auftritt.

- Ein Nachteil des GSD-Verfahrens ist die relativ lange Pixel-Verweildauer beim Abscannen, das zur Bilderzeugung nötig ist. Zum einen wird sie benötigt, um das für die Triplettsättigung nötige stationäre Gleichgewicht zu erreichen (ca. 10 μs). Weiter ist nach der Detektion eines Punktes zur Detektion eines benachbarten Punktes zunächst eine Relaxation aller Moleküle zurück in den Grundzustand erforderlich (nochmals ca. 10 μs). Erfindungsgemäß ist eine Sättigung des Triplettzustands nicht erforderlich, weshalb nun mit kürzeren Verweildauern gearbeitet werden kann, die nach unten im Wesentlichen durch die Periode der Zentrallaserstrahlmodulationen limitiert sind.

- Die im Rahmen der Erfindung benötigten Intensitäten fallen niedriger als bei STED aus.

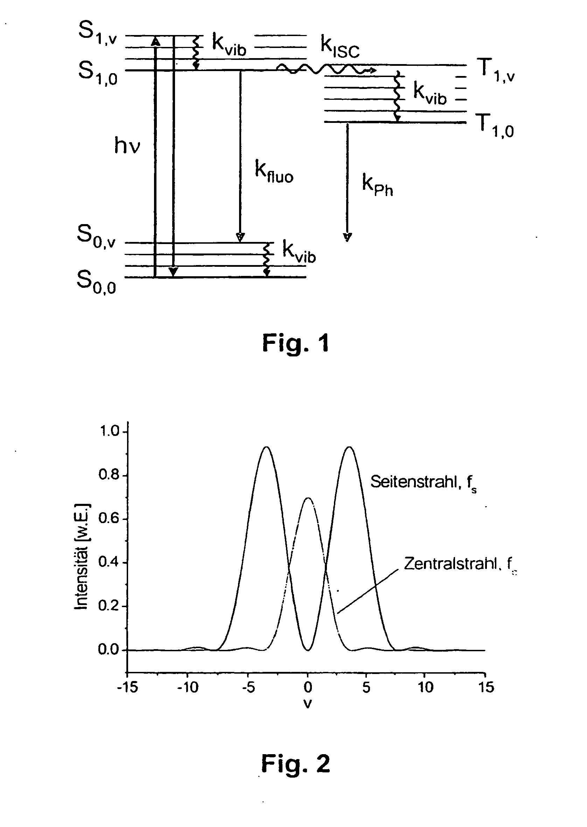

- Ein wesentlicher Vorteil der Erfindung ist die Flexibilität hinsichtlich der *Wahl des Farbstoffs* sein. Während man bei GSD durch das nötige Intersystern-Crossing eingeschränkt ist, werden bei STED Moleküle benötigt, bei denen eine möglichst effiziente Abregung des $S_{1,0}$-Zustands möglich ist. Die Erfindung ist demgegenüber mit fast jedem Farbstoff möglich, dessen Niveauschema dem in Fig. 1 skizzierten ungefähr entspricht. Eine Optimierung der Reaktionsraten (z.B. hinsichtlich moderat längerer Fluoreszenzlebensdauern) ist vorteilhaft, stellt aber keine prinzipielle Beschränkung des Verfahrens dar. Es ist zu betonen, daß die wesentliche Modifikation hinsichtlich konventioneller Techniken in der Art der Anregung und Detektion zu suchen sind und weniger in der Wahl der zu untersuchenden Probe (ganz im Gegensatz beispielsweise zu DE 10325460 A1).

- Bei den bisher realisierten STED-Experimenten sind zwei Wellenlängen nötig, wohingegen die Erfindung mit *nur einer Wellenlänge* arbeitet. Die Anwendung mehrere dichroitischer Strahlteiler ist nicht erforderlich. Somit kann ein verhältnismäßig einfacher Aufbau verwendet werden.

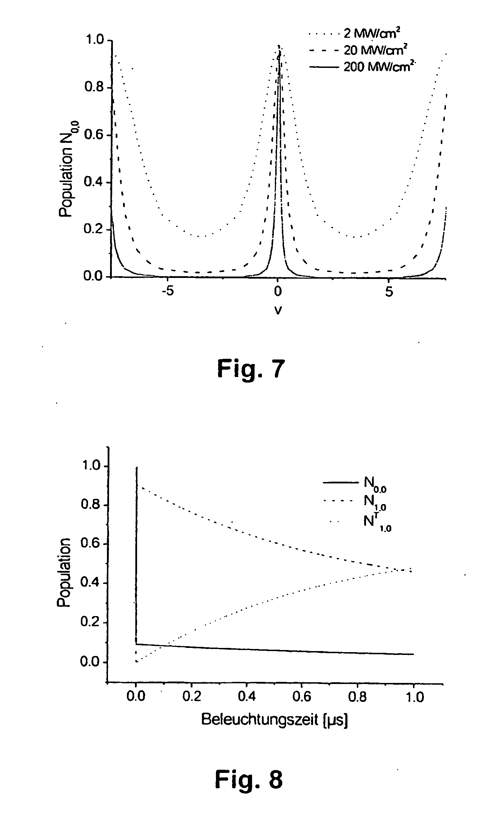

- Bei STED-Experimenten ist in der Regel eine Anwendung von intensiven gepulsten Lasern sinnvoll, denn die Population des angeregten Zustands sollte im Seitenlaserstrahlbereich abgebaut sein, bevor Fluoreszenz einsetzt. Demgegenüber kann die Erfindung mit cw-Lasern arbeiten, die gleichzeitig eingestrahlt werden. Vorteilhaft ist es allerdings, die Bestrahlung mit dem Zentrallaserstrahl gegenüber dem Seitenlaserstrahl um ca. 10 ns zu verzögern, da dann bereits eine weitgehende Depopulation des Grundzustands stattgefunden hat (vgl. Fig. 7). Unter Umständen ist es auch möglich die Modulation in Form eines gepulsten Lasers zu realisieren.

Die erfindungsgemäße modulationsmarkierte Fluoreszenz (MMF) erlaubt eine hochauflösende optische Abbildungen nochmals zu verbessern. Sie ist eine Alternativen zu den beiden bereits bekannten "Single-Point"-Verfahren GSD und STED. Wie dort wird auch hier mit mindestens zwei Laserstrahlungsfeldern (Zentral- und Seitenlaserstrahl) gearbeitet. Während man bei GSD bzw. STED allerdings bemüht ist, die Fluoreszenz im Seitenlaserstrahlbereich komplett zu unterdrücken, wird bei MMF der Zentral- und der seitlich angeregte Probenbereich beispielsweise durch modulierte Zentrallaserstrahlanregung mit anschließender phasensensitiver Detektion vom interessierenden Signal unterscheidbar und damit separierbar. Die Anwendung einer modulationsfrequenzempfindlichen Detektion, z.B. durch Lock-In-Technik, ist ein zentraler Punkt dafür. Das Vermeiden von markierter Fluoreszenz im Seitenlaserstrahlbereich, d.h. eine Anregung durch Photonen des ZentralLaserstrahlungsfeldes, läßt sich durch ein unausgeglichenes Intensitätsverhältnis zwischen den Laserstrahlungsfeldern bzw. eine gesättigte Depopulation des Grundzustands erreichen. Ein wesentlicher Vorteil von MMF gegenüber den bekannten Verfahren GSD bzw. STED ist die Freiheit in der Wahl des Fluorophors und die Möglichkeit, Zentral- und Seitenlaser bei der gleichen Wellenlänge betreiben zu können.

Die Erfindung wird nachfolgend unter Bezugnahme auf die Zeichnungen beispielshalber noch näher erläutert. In den Zeichnungen zeigt:

Fig. 1    ein beispielhaftes Energieschema eines Farbstoffmoleküls oder einer Probe, das bzw. die im Rahmen der Erfindung verwendet wird;

Fig. 2    eine mögliche Intensitätsverteilung für einen Seitenstrahl und einen Zentralstrahl im erfindungsgemäßen Verfahren bzw. in der erfindungsgemäßen Vorrichtung;

Fig. 3    ein exemplarisches Schema für eine Vorrichtung gemäß der Erfindung;

Fig. 4    das Intensitätsverhältnis zwischen Zentralstrahl und Seitenstrahl für verschiedene Ausführungsformen der Erfindung;

Fig. 5    die Gleichgewichtspopulation als Funktion der eingestrahlten Laserstrahlungsintensität für einen beispielhaften Farbstoff, er im Rahmen der Erfindung verwendet werden kann;

Fig. 6 die Gleichgewichtspopulation des Grundzustandes entlang einer normalisierten Koordinate bei Einstrahlung des Seitenlaserstrahls im erfindungsgemäßen Verfahren für drei verschiedene mögliche Spitzenintensitäten;

Fig. 7 eine Abbildung ähnlich der Fig. 6 für andere Farbstoffparameter und

Fig. 8 Population der Grundzustände sowie angeregter Zustände als Funktion der Beleuchtungszeit bei einer bestimmten Ausführungsform der Erfindung.

Fig. 1 zeigt schematisch die für ein fluoreszierendes Farbstoffmolekül an und für sich bekannte, typische Anordnung der untersten Energieniveaus. Üblicherweise regen Photonen der Energie hv die Moleküle vom Zustand $S_{0,0}$ (näherungsweise Schwingungsgrundzustand im untersten elektronischen Zustand) in einen schwingungsangeregten vibronischen Zustand $S_{1,v}$ an. Umgekehrt ist natürlich ebenso die stimulierte Emission möglich. Ausgehend von $S_{1,v}$ finden eine schnelle Schwingungsrelaxation in den Zustand $S_{1,0}$ und anschließend als Konkurrenzprozesse entweder Fluoreszenz oder der Übergang in den Triplettzustand $T_{1,v}$ mit anschließender Phosporeszenz statt.

Die Anregung erfolgt erfindungsgemäß nun durch mindestens zwei unterschiedliche Lichtfelder, die in gleicher Weise angeordnet sind wie Anregungs- und SättigungsLaserstrahlungsfeld im bekannten GSD- bzw. STED-Verfahren. Die Verwendung von Lasern erscheint sinnvoll, stellt aber generell keine Beschränkung des Verfahrens dar.

Fig. 2 zeigt mögliche Airy-Intensitätsverteilungen der Laserstrahlungsfelder entlang der normalisierten Koordinate v=kr*N.A. (mit NA: Apertur, k: Wellenzahl $2\pi/\lambda$ und r: radiale Entfernung vom Zentrum). Die Felder werden im folgenden mit Zentralstrahl und Seitenstrahl bezeichnet. Sie können die gleiche Wellenlänge aufweisen.

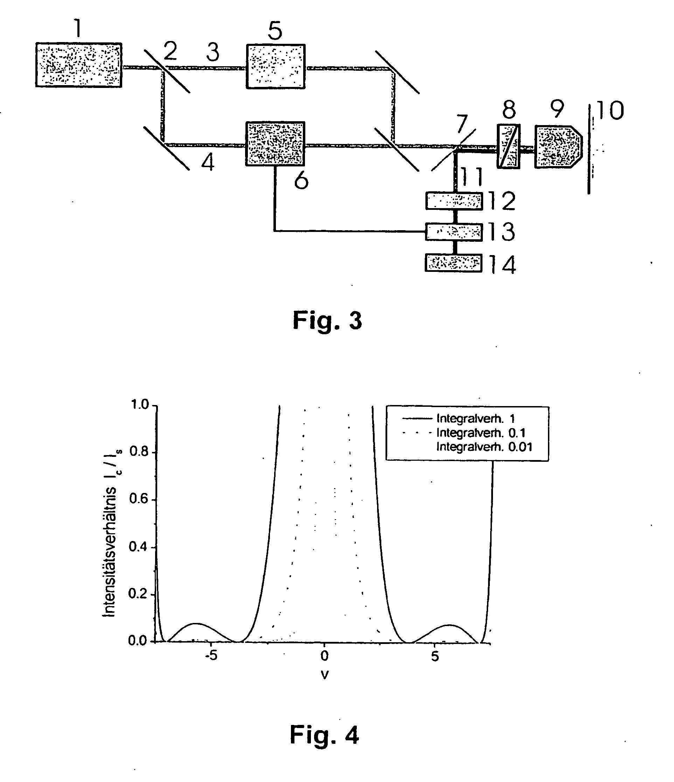

Fig. 3 zeigt eine Ausführungsform der Vorrichtung, die hier einen Mach-Zehnder ähnlichen Aufbau hat. Hinter einer Lichtquelle 1 erfolgt über einen Strahlteiler 2 eine Aufteilung in Zentral-4 und Seitenstrahlengang 3, wobei sich in letzterem eine Einheit zur räumlichen Strahlformung 5 befindet. Diese kann beispielsweise eine Ringapertur beinhalten, welche auf die Probe 10 abgebildet wird. Andere Möglichkeiten sind beispielsweise in T. A. Klar, E. Engel und S.W. Hell, "Breaking Abbe's diffraction resolution limit in fluorescence microscopy with stimulated emission depletion beams of various shapes", Phys. Rev. E 64, 066613 (2001), beschrieben. Natürlich können auch zwei getrennte Strahlquellen verwendet werden.

Für den nicht räumlich strahlgeformten Zentralstrahlengang 4 ist eine Modulationseinheit 6 vorgesehen, die diesen Strahl mit einer Frequenz $f_c$ moduliert.

Nach Überlagerung werden beide Strahlen beugungsbegrenzt in die Probe 10 fokussiert. Dazu dient ein Objektiv 9. Der Fokus wird zusätzlich zweidimensional mittels einer Scan-Einheit 8 verschoben.

In der Probe 10 entsteht folglich an verschiedenen Stellen die in Fig. 2 gezeigte Überlagerung von Zentral- und Seitenstrahl. Die dadurch angeregte Fluoreszenz wird über Objektiv 9, Scan-Einheit 8 sowie einen vorzugsweise dichroitischen Strahlteiler 7 mit einem Detektor 12, der z.B. konfokal ausgebildet sein kann, aufgenommen. Den Betrieb des Gerätes steuert eine (nicht dargestellte) Steuereinheit.

Wesentlich ist nun, daß das so gemessene Fluoreszenzsignal durch Berücksichtigung der Modulation dem jeweiligen Strahl 3, 4 zugeordnet werden kann, d.h. die Fluoreszenz wird entsprechend markiert. Dies gelingt durch Ausnutzung von Modulationseffekten. Im einfachsten Fall ist beispielsweise der Seitenstrahl nicht moduliert ($f_s = 0$), während die Intensität des Zentralstrahls sinusförmig mit einer Frequenz $f_c$ von typischerweise 1-100 MHz variiert, wozu im Zentralstrahlengang die entsprechende Modulationseinheit 6 eingebracht ist. Das durch den Zentralstrahl erzeugte Fluoreszenzsignal ist dann ebenfalls mit der Frequenz $f_c$ moduliert. Dieser Effekt entspricht unter anderem demjenigen, welcher auch bei der Phasenmethode zur Messung von Fluoreszenzlebensdauern angewandt wird (siehe z.B. M.J. Booth und T. Wilson, "Low-cost, frequency-domain, fluorescence lifetime confocal microscopy", J. Microscopy 214, 36 (2004)). Alternativ sind Seitenstrahl und Zentralstrahl jeweils mit den Frequenzen $f_s$ und $f_c$ zu modulieren, wobei gilt: $f_s \neq f_c$.

Die Modulationsfrequenz $f_c$ kann dem Farbstoff entsprechend optimiert werden. Wird nun wie in Fig. 3 exemplarisch gezeigt, phasensensitiv mit Hilfe eines Lock-In-Verstärkers (13) auf der Frequenz $f_c$ detektiert, dann ist das durch den Zentralstrahl erzeugte Fluoreszenzsignal extrahiert. Moleküle, welche demgegenüber (auch) durch den Seitenlaserstrahl angeregt werden, zeigen eine nicht-modulierte Fluoreszenz und tragen daher nicht zum Signal am Ausgang 14 bei. Um diesen Effekt noch zu verstärken, kann zusätzlich unter Ausnutzung der Fluoreszenzpolarisation auch eine polarisationssensitive Detektion stattfinden.

Bei einer Anordnung entsprechend Fig. 2 und 3 läßt sich eine Auflösung im molekularen Bereich erzielen, wenn sichergestellt ist, daß Moleküle, die sich in einem Probenbereich befinden, in welchem der Seitenlaser eine von Null verschiedene Intensität aufweist, mit möglichst großer Wahrscheinlichkeit durch den Seitenlaserstrahl angeregt werden. Dabei spielt es keine Rolle, ob der durch den Seitenlaserstrahl angeregte Zustand Singulett- oder Tripletteigenschaften aufweist. Wesentlich ist lediglich, daß die Intensität der von den durch den Seitenlaserstrahl angeregten Molekülen emittierten Strahlung nicht mit der Frequenz $f_s$ moduliert ist und daher durch das Lock-In-Verfahren unterdrückt wird. Die Lock-In-Technik ist natürlich nur ein Beispiel für ein phasen- oder frequenzsensitives Detektionsverfahren.

Die genannte Bedingung läßt sich beispielsweise erfüllen, wenn der Seitenlaserstrahl 5 eine so hohe Intensität aufweist, daß in der Probe 10 eine Sättigung des Fluoreszenzübergangs eintritt. Liegt gemäß Fig. 1 ein Zweiniveausystem $S_{0,0}/S_{1,v}$ vor, in dem keine Schwingungs- bzw. Triplettzustände existieren und die Fluoreszenz von $S_{1,v}$ aus stimuliert oder spontan erfolgt, so gilt für die Population $N_{1,v} = 1-N_{0,0}$ des $S_{1,v}$-Zustands im stationären Gleichgewicht:

$$N_{1,v} \propto \frac{N_{p,s}}{2N_{p,s} + \dfrac{k_{fluo}}{\sigma}}$$

wobei $N_{p,s}$ den Photonenfluss (des Seitenlaserstrahls 5) und $\sigma$ den Absorptionsquerschnitt des optischen Übergangs darstellen. Die Intensität der Fluoreszenzstrahlung ist proportional zu $N_{1,v}$, woran sich direkt der oben für hohe Auflösung nötige nichtlineare Zusammenhang zwischen der Intensität des anregenden und der des emittierten Lichts verifizieren läßt. Für sehr hohe Photonenflüsse wird eine Gleichbesetzung der Zustände und damit eine Sättigung erreicht. Zudem ergibt sich für den Fall einer im Vergleich zum Seitenlaserstrahls 5 sehr viel kleineren Intensität des modulierten Zentrallaserstrahls 4 (d.h. $N_{p,s} \gg N_{p,c}$), daß die Wahrscheinlichkeit einer Fluoreszenzanregung durch den Zentrallaserstrahl 4 nur am Intereferenzminimum wesentlich von Null verschieden ist. Dieser Sachverhalt wird anhand von Fig. 4 deutlich, wo entsprechend den Intensitätsverläufen in Fig. 2 das Verhältnis $I_c / I_s$ (Zentralstrahlintensität zu Seitenstrahlintensität) als Funktion der normalisierten Koordinate v aufgetragen ist. Dabei sind drei unterschiedliche Verhältnisse der jeweiligen integralen Intensitäten berücksichtigt. Man erkennt, daß bei einem Integralverhältnis von 0.01 (, d.h. der Seitenlaserstrahl 4 ist 100x stärker als der Zentrallaserstrahl 5) im Bereich 1 v 1 > 1 eine nur sehr geringe Wahrscheinlichkeit für die Anregung durch den Zentrallaserstrahl 5 besteht. Hier lokalisierte Moleküle zeigen entsprechend kaum modulierte Fluoreszenz und werden bei der modulationsfrequenzsensitiven Detektion folglich unterdrückt. Somit erreicht dieser Mechanismus eine Auflösungssteigerung über die Beugungsgrenze hinaus.

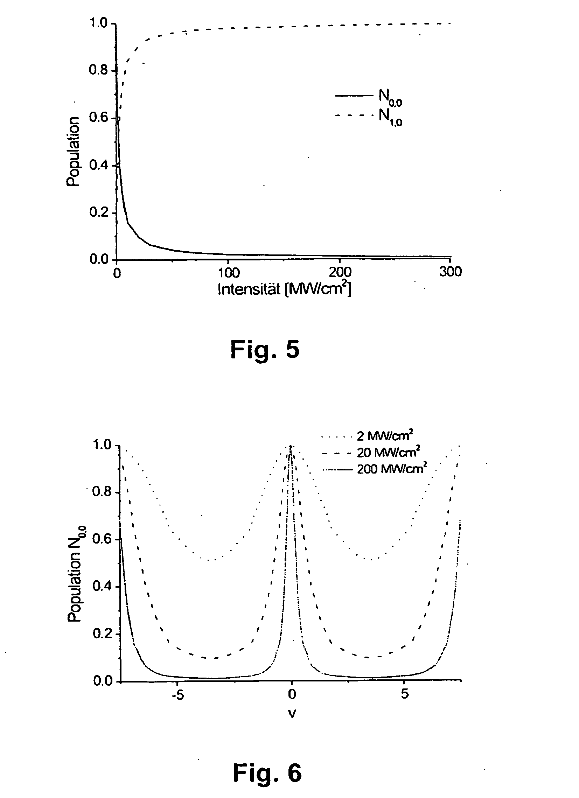

In einer Weiterbildung werden die in Fig. 1 eingezeichneten Schwingungsniveaus der einzelnen elektronischen Zustände in die Überlegungen mit einbezogen. Der Triplettzustand sei zunächst weiterhin vernachlässigt ($k_{ISC} = 0$). Um die Besetzung der einzelnen Zustände bei Einstrahlung des Seitenlaserstrahls 4 zu ermitteln, lassen sich in erster Näherung (unter Vernachlässigung von Kohärenztermen) Ratengleichungen für verschiedene Laserintensitäten lösen. Fig. 5 zeigt die Population der Zustände $S_{0,0}$ und $S_{1,0}$ ($N_{0,0}$ bzw. $N_{1,0}$) als Funktion der Laserstrahlintensität. Dabei wurde exemplarisch ein Absorptionsquerschnitt von $s = 10^{-16}$ cm$^{-2}$, eine Schwingungsrelaxationsrate von $k_{vib} = (10^{-12}s)^{-1}$ und eine Fluoreszenzrate von $k_{fluo} = (2*10^{-9}s)^{-1}$ angenommen. Dargestellt sind Werte für das stationäre Gleichgewicht, welches nach einer Beleuchtungsdauer von ca. 10 ns stets erreicht ist. Die Summe über alle Populationen ist auf 1 normiert. Es zeigt sich, daß der Grundzustand für Intensitäten größer als 100 MW/cm$^2$ fast vollständig depopuliert ist. Ausgehend von der $N_{0,0}$-Kurve in Fig. 5 können des Weiteren die in Fig. 6 gezeigten Kurven abgeleitet werden, welche die durch den Seitenlaserstrahl erzeugte Depopulation des Grundzustands als Funktion der Koordinate v demonstrieren. Es wurde ein Intensitätsprofil entsprechend Fig. 2 mit drei unterschiedlichen Spitzenintensitätswerten (Intensität am Maximum: 2 MW/cm$^2$, 20 MW/cm$^2$, 200 MW/cm$^2$) angenommen. Deutliche ist ein Sättigungseffekt zu erkennen, der zu einer Einschnürung der Grundzustandspopulation am Interferenzminimum führt. Wird nun zusätzlich der modulierte Zentrallaserstrahl mit geringer Intensität eingestrahlt, so ist die modulierte Anregung im Wesentlichen auf den Bereich v = 0 beschränkt. Der Depopulationseffekt spielt hier mit dem oben erwähnten Sachverhalt der unterschiedlichen Anregungswahrscheinlichkeiten (Fig. 4) zusammen.

Die spezielle Form der Kurven in Fig. 6 hängt natürlich v.a. von den Eigenschaften des gewählten Fluorophores bzw. der Probe 10 ab. Dem obigen Beispiel liegt eine Fluoreszenzlebensdauer von 2 ns zugrunde. Eine effizientere Sättigung (und damit niedrigere Intensitäten) lassen sich realisieren, wenn Farbstoffe mit längeren Lebensdauern zum Einsatz kommen. Fig. 7 entspricht Fig. 6, wobei hier eine Lebensdauer von 10 ns angenommen wurde. Klar ist zu erkennen, daß hier bereits bei 20 MW/cm$^2$ ein Abflachen der Populationskurve auftritt.

In einem realen System ist die Bedingung eines verschwindenden Intersystem-Crossings in der Regel nicht vollständig erfüllt. Als typische Werte können in diesem Zusammenhang Raten von $k_{ISC} = (10^{-6}s)^{-1}$ und $k_{Ph} = (2*10^{-6}s)^{-1}$ angenommen werden, wie sie beispielsweise für Rhodamin 6G dokumentiert sind [vgl. M. Heupel, "Fluoreszenzspektroskopie als neue Messmethode zur höchstempfindlichen Untersuchung transienter Zustände", Dissertation, Uni-Siegen (2001)]. Fig. 8 zeigt, wie sich unter diesen Bedingungen und bei Annahme einer Bestrahlungsintensität von 20 MW/cm$^2$ die Populationen der Zustände $S_{0,0}$, $S_{1,0}$ und $T_{1,0}$ (vgl. Fig. 1) innerhalb von 1 $\mu$s ändern. Diese Beleuchtungsdauer ist ungefähr vonnöten, wenn eine Modulation im Bereich von einigen 10 MHz detektiert werden soll. Es ist zu erkennen, daß der unterste angeregte Singulettzustand und der Triplettzustand bei den gewählten Parametern während der hier dargestellten Zeitperiode etwa gleich besetzt werden. Im stationären Gleichgewicht verschiebt sich die Besetzung zugunsten des Triplettzustands, der dann in diesem Beispiel eine ca. doppelt so hohe Population aufweist. In jedem Fall wird der Grundzustand weitgehend entvölkert. Das Ausmaß der Entvölkerung hängt weniger von der Beleuchtungsdauer als vielmehr von der verwendeten Laserintensität ab. Bei Anwendung eines Seitenlaserstrahlprofiles wie in Fig. 2 ergibt sich wiederum ein Sättigungseffekt ähnlich dem der Fig. 6 bzw. 7. Da die Besetzung des Triplettzustands oft mit einem über Singulett-Sauerstoff ablaufenden Photobleaching-Prozess in Verbindung gebracht wird [vgl. C. Eggeling, A. Volkmer und C.A.M. Seidel, "Molecular Photobleaching kinetics of Rhodamine6G under the conditions of one- and two-photon induced confocal fluorescence microscopy", ChemPhysChem 6, 791-804 (2005)], scheint eine eher kurze Belichtungsdauer von Vorteil sein. Es muss allerdings gewährleistet sein, daß die Modulationen des Zentrallaserstrahls 5 detektierbar bleiben, d.h. es wird eine ausreichende Anzahl an Fluoreszenzzyklen benötigt.

An dieser Stelle sei erwähnt, daß auch andere Laserstrahlungsfeldanordnungen und Modulationsschemata als das oben beschriebene denkbar sind. So kann beispielsweise gezielt die Fluoreszenz von Molekülen im Überlappbereich zweier Laserstrahlungsfelder detektiert werden, indem eine Lock-In-Detektion mit der Summen- oder Differenzfrequenz $f_s + f_c$ bzw. $f_s - f_c$ angewandt wird (die Bezeichnung Zentralfeld und Seitenfeld trifft hier unter Umständen nicht mehr zu). Werden dabei zwei einfache (teilweise überlappende) Airy-Profile gewählt, so ist eine ähnliche Auflösung erreichbar, wie beim sogen. "Point-Spread-Autocorrelation-Function-Imaging" [vgl. G.J. Brakenhoff und M. Müller, "Improved axial resolution by point spread autocorrelation function imaging", Opt. Lett. 21, 1721-1723 (1996)].

**Patentansprüche**

1.  Auflösungsgesteigertes Lumineszenz-Mikroskopieverfahren, bei dem

    - eine Probe (10) durch Einstrahlung von Anregungsstrahlung (4, 5) zur Emission von Lumineszenzstrahlung angeregt wird und ein Bild der lumineszierenden Probe (10) gewonnen wird, wobei
    - in einem ersten Probenteilvolumen der Probe ein erstes Laserstrahlungsfeld (5) der Anregungsstrahlung und in einem zweiten Probenteilvolumen der Probe (10) ein zweites Laserstrahlungsfeld (4) der Anregungsstrahlung eingestrahlt wird, wobei erstes und zweites Probenteilvolumen sich teilweise aber nicht vollständig überlappen,
    **dadurch gekennzeichnet, daß**
    nur das erste Laserstrahlungsfeld (5) mit einer ersten Frequenz moduliert wird erstes und zweites Laserstrahlungsfeld (5, 4) die gleiche Wellenlänge haben und

    - Lumineszenzstrahlung aus dem ersten Probenteilvolumen modulationsfilternd detektiert wird, so daß Lumineszenzstrahlung aus dem zweiten Probenteilvolumen unterdrückt wird.

2.  Verfahren nach Anspruch 1, wobei das zweite Probenteilvolumen durch das zweite Laserstrahlungsfeld (4) in Lumineszenzsättigung gebracht wird.

3.  Verfahren nach einem der obigen Ansprüche, wobei die Intensität des zweiten Laserstrahlungsfeldes (4) mindestens 50mal, vorzugsweise 100mal größer ist, als die des ersten Laserstrahlungsfeldes (5).

4.  Verfahren nach einem der obigen Ansprüche, wobei zumindest das erste Laserstrahlungsfeld (5) beugungsbegrenzt auf die Probe (10) fokussiert wird.

5.  Verfahren nach einem der obigen Ansprüche, wobei das zweite Laserstrahlungsfeld (4) mit einer von der ersten Frequenz verschiedenen zweiten Frequenz moduliert wird.

6.  Verfahren nach einem der obigen Ansprüche, wobei die modulationsfilternde Detektion mittels Lock-In-Technik erfolgt.

7.  Verfahren nach einem der obigen Ansprüche, wobei die erste Frequenz zwischen 1 und 100 MHz liegt.

8.  Auflösungsgesteigertes Lumineszenzmikroskop mit Mitteln zum Einstrahlen von Anregungsstrahlung auf eine Probe (10) zur Anregung der Emission von Lumineszenzstrahlung und Mittel zur Bildgewinnung der lumineszierenden Probe (10), wobei die Mittel zum Einstrahlen der Anregungsstrahlung einen Modulator (6) aufweisen, der Anregungsstrahlung mit einer ersten Frequenz moduliert, wobei die Mittel zum Einstrahlen der Anregungsstrahlung Mittel zum Einstrahlen eines ersten Laserstrahlungsfelds (5) in ein erstes Probenteilvolumen der Probe (10) und Mittel zum Einstrahlen eines zweiten Laserstrahlungsfelds (4) in ein zweites Probenteilvolumen der Probe (10) aufweisen, erstes und zweites Probenteilvolumen sich teilweise, aber nicht vollständig überlappen **dadurch gekennzeichnet, daß** das erste und das zweite Laserstrahlungsfeld (5, 4) die gleiche Wellenlänge haben.

    - der Modulator (6) nur das erste Laserstrahlungsfeld (5) mit der ersten Frequenz moduliert, und
    - die Mittel zur Bildgewinnung Lumineszenzstrahlung aus dem ersten Probenteilvolumen modulationsfilternd detektieren, so daß Lumineszenzstrahlung aus dem zweiten Probenteilvolumen durch die Filterung unterdrückt ist.

9. Vorrichtung nach Anspruch 8, **dadurch gekennzeichnet, daß** die Mittel zur Einstrahlung des zweiten Laserstrahlungsfeldes (4) das zweite Probenteilvolumen in Lumineszenzsättigung bringen.

10. Vorrichtung nach einem der obigen Vorrichtungsansprüche, wobei die Intensität des zweiten Laserstrahlungsfeldes (4) mindestens 50mal, vorzugsweise 100mal größer ist, als die des ersten Laserstrahlungsfeldes (5).

11. Vorrichtung nach einem der obigen Vorrichtungsansprüche, **gekennzeichnet durch** eine Optik (9), die Laserstrahlung für das erste Laserstrahlungsfeld (5) beugungsbegrenzt auf die Probe (10) fokussiert.

12. Vorrichtung nach einem der obigen Vorrichtungsansprüche, wobei ein Modulator vorgesehen ist, der das zweite Laserstrahlungsfeld (4) mit einer von der ersten Frequenz verschiedenen zweiten Frequenz moduliert.

13. Vorrichtung nach einem der obigen Vorrichtungsansprüche, wobei die Mittel zur Bildgewinnung einen Lock-In-Verstärker (13) aufweisen, dem die erste Frequenz sowie die Signale eines Detektors (12) zugeführt sind.

14. Vorrichtung nach einem der obigen Vorrichtungsansprüche, wobei die erste Frequenz zwischen 1 und 100 MHz liegt.

**Claims**

1. A method for resolution-enhanced luminescence microscopy in which method

   - a sample (10) is excited through irradiation of excitation radiation (4, 5) to the emission of luminescence radiation, and an image of the luminescing sample (10) is aquired, wherein
   - a first laser radiation field (5) of the excitation radiation is irradiated to a first volume part of the sample (10), and a second laser radiation field (4) of the excitation radiation is irradiated to a second volume part of the sample, wherein
   - the first volume part of the sample and the second volume part of the sample overlap one another partially but not completely, **characterized in that**
   - only the first laser radiation field (5) is modulated with a first frequency,
   - the first and second laser radiation fields (4, 5) have the same wavelength and
   - luminescence radiation is detected from the first volume part of the sample with modulation filtering so that luminescence radiation from the second volume part of the sample is suppressed.

2. The method according to claim 1, wherein the second volume part of the sample is brought to luminescence saturation by the second laser radiation field (4).

3. The method according to any of the above claims, wherein the intensity of the second laser radiation field (4) is at least 50-times greater, preferably 100-times greater, than that of the first laser radiation field (5).

4. The method according to any of the above claims, wherein at least the first laser radiation field (5) is focused on the sample (10) in a diffraction-limited manner.

5. The method according to any of the above claims, wherein the second laser radiation field (4) is modulated with a second frequency that differs from the first frequency.

6. The method according to any of the above claims, wherein modulation-filtering detection is carried out by lock-in technique.

7. The method according to any of the above claims, wherein the first frequency is between 1 MHz and 100 MHz.

8. A resolution-enhanced luminescence microscope comprising means for irradiating a sample (10) with excitation radiation for exciting the emission of luminescence radiation, and means for acquiring an image of the luminescing sample (10), wherein the means for irradiating with excitation radiation comprise a modulator (6) modulating the excitation radiation with a first frequency, wherein

   - the means for irradiating with excitation radiation have means for irradiating a first volume part of the sample (10) with a first laser radiation field (5) and means for irradiating a second volume part of the sample with a second laser radiation field (4),
   - the first volume part of the sample and the second volume part of the sample overlap one another partially but not completely, **characterized in that**
   - the first and second laser radiation fields (4, 5) have the same wavelength and
   - the modulator (6) modulates only the first laser radiation field (5) with the first frequency, and
   - the means for acquiring an image detect luminescence radiation from the first volume part of the sample with modulation filtering so that the luminescence radiation from the second volume part of the sample is suppressed by the filtering.

9. The microscope according to claim 8, wherein the second volume part of the sample is brought to luminescence saturation by the means for irradiating with second laser radiation field (4).

10. The microscope according to any of the above device claims, wherein the intensity of the second laser radiation field (4) is at least 50-times, preferably 100-times greater, than that of the first laser radiation field (5).

11. The microscope according to any of the above device claims, further comprising optics (9) which focus the laser radiation for the first laser radiation field (5) on the sample (10) in a diffraction-limited manner.

12. The microscope according to according to any of the above device claims, wherein a modulator is provided which modulates the second laser radiation field (4) with a second frequency that differs from the first frequency.

13. The microscope according to any of the above device claims, wherein the means for acquiring images have a lock-in amplifier (13), the first frequency and the signals of a detector (12) being fed to the lock-in amplifier (13).

14. The microscope according to any of the above device claims, wherein the first frequency is between 1 MHz and 100 MHz.

**Revendications**

1. Procédé de microscopie luminescente à résolution améliorée, dans lequel

   - un échantillon (10) est stimulé par la projection d'un rayonnement de stimulation (4, 5) pour l'émission d'un rayonnement luminescent et l'image de l'échantillon (10) luminescent est obtenue,
   - un premier champ de rayonnement laser (5) du rayonnement de stimulation étant projeté dans un premier volume partiel de l'échantillon, et un deuxième champ de rayonnement laser (4) du rayonnement de stimulation étant projeté dans un deuxième volume partiel de l'échantillon (10),
   - le premier et le deuxième volume d'échantillon se couvrant en partie et non pas en totalité, **caractérisé en ce que**
   - seul le premier champ de rayonnement laser (5) est modulé avec une première fréquence,

   - le premier et le deuxième champ de rayonnement laser (5, 4) ont la même longueur d'ondes, et
   - le rayonnement luminescent sortant du premier volume partiel de l'échantillon est détecté par filtrage de modulation, de telle sorte que le rayonnement luminescent sortant du deuxième volume partiel de l'échantillon est affaibli.

2. Procédé selon la revendication 1, dans lequel le deuxième volume partiel de l'échantillon est amené à saturation de la luminescence par le deuxième champ de rayonnement laser (4).

3. Procédé selon l'une quelconque des revendications précédentes, dans lequel l'intensité du deuxième champ de rayonnement laser (4) est au moins 50 fois, de préférence 100 fois supérieure à celle du premier champ de rayonnement laser (5).

4. Procédé selon l'une quelconque des revendications précédentes, dans lequel au moins le premier champ de rayonnement laser (5) est focalisé sur l'échantillon (10) de manière limitée par diffraction.

5. Procédé selon l'une quelconque des revendications précédentes, dans lequel le deuxième champ de rayonnement laser (4) est modulé avec une deuxième fréquence, différente de la première fréquence.

6. Procédé selon l'une quelconque des revendications précédentes, dans lequel la détection par filtrage de modulation est effectuée au moyen de la technique lock-in.

7. Procédé selon l'une quelconque des revendications précédentes, dans lequel la première fréquence se situe entre 1 et 100 MHz.

8. Microscope luminescent à résolution améliorée, comportant des moyens destinés à projeter un rayonnement de stimulation sur un échantillon (10) pour stimuler l'émission d'un rayonnement luminescent et des moyens destinés à générer une image de l'échantillon (10) luminescent, les moyens destinés à projeter le rayonnement de stimulation comportant un modulateur (6) qui module le rayonnement de stimulation avec une première fréquence, sachant que

   - les moyens destinés à projeter le rayonnement de stimulation comportent des moyens pour la projection d'un premier champ de rayonnement laser (5) dans un premier volume partiel de l'échantillon (10) et des moyens pour la projection d'un deuxième champ de rayonnement laser (4) dans un deuxième volume partiel de l'échantillon (10),

- le premier et le deuxième volume de l'échantillon se couvrent en partie et non pas en totalité, **caractérisé en ce que**
- le premier et le deuxième champ de rayonnement laser (5, 4) ont la même longueur d'ondes,
- le modulateur (6) module uniquement le premier champ de rayonnement laser (5) avec le première fréquence, et
- les moyens destinés à générer une image détectent par filtrage de modulation le rayonnement luminescent sortant du premier volume partiel de l'échantillon, de telle sorte que le rayonnement luminescent sortant du deuxième volume partiel de l'échantillon est affaibli par le filtrage.

9. Dispositif selon la revendication 8, **caractérisé en ce que** les moyens destinés à projeter le deuxième champ de rayonnement laser (4) amènent le deuxième volume partiel de l'échantillon à saturation de la luminescence.

10. Dispositif selon l'une quelconque des revendications précédentes portant sur le dispositif, dans lequel l'intensité du deuxième champ de rayonnement laser (5) est au moins 50 fois, de préférence 100 fois supérieure à celle du premier champ de rayonnement laser (5).

11. Dispositif selon l'une quelconque des revendications précédentes portant sur le dispositif, **caractérisé par** une optique (9), qui focalise sur l'échantillon (10), de manière limitée par diffraction, le rayonnement laser (5) pour le premier champ de rayonnement laser (4).

12. Dispositif selon l'une quelconque des revendications précédentes portant sur le dispositif, dans lequel il est prévu un modulateur (6), qui module le deuxième champ de rayonnement laser (4) avec une deuxième fréquence, différente de la première fréquence.

13. Dispositif selon l'une quelconque des revendications précédentes portant sur le dispositif, dans lequel les moyens destinés à générer une image comportent un amplificateur lock-in (13), vers lequel sont acheminés la première fréquence, ainsi que les signaux d'un détecteur (12).

14. Dispositif selon l'une quelconque des revendications précédentes portant sur le dispositif, dans lequel la première fréquence se situe entre 1 et 100 MHz.

**Fig. 1**

**Fig. 2**

**Fig. 3**

**Fig. 4**

Fig. 5

Fig. 6

**Fig. 7**

**Fig. 8**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5814820 A
- US 20010045529 A1
- WO 2006016475 A1
- US 5866911 A
- DE 4416558 C2
- DE 19908883 A1
- DE 10325460 A1

**In der Beschreibung aufgeführte Nicht-Patentliteratur**

- **Y. GARINI ; B.J. VERMOLEN ; I.T. YOUNG.** From micro to nano: recent advances in high-resolution microscopy. *Curr. Opin. Biotechnol.,* 2005, vol. 16, 3-12
- **R. HEINTZMANN ; T.M. JOVIN ; C. CREMER.** Saturated patterned excitation microscopy - a concept for optical resolution improvement. *JOSA A,* 2002, vol. 19, 1599-1609
- **W. DENK ; J.H. STRICKLER ; W.W. WEBB.** Two-photon fluorescence scanning microscopy, a concept for breaking the diffraction resolution limit. *Science,* 1990, vol. 248, 73-76
- **S.W. HELL ; M. KROUG.** Ground-state-depletion fluorescence microscopy: a concept for breaking the diffraction resolution limit. *Appl. Phys. B,* 1995, vol. 60, 495-497
- **S.W. HELL ; J. WICHMANN.** Breaking the diffraction resolution limit by stimulated emission: stimulated-emission-depletion fluorescence microscopy. *Opt. Lett.,* 1994, vol. 19, 780-782
- **T. A. KLAR ; E. ENGEL ; S.W. HELL.** Breaking Abbe's diffraction resolution limit in fluorescence microscopy with stimulated emission depletion beams of various shapes. *Phys. Rev. E,* 2001, vol. 64, 066613
- **V. WESTPHAL ; S.W. HELL.** Nanoscale Resolution in the focal plane of an optical microscope. *PRL 94,* 2005, 143903
- **T. WATANABE ; Y. IKETAKI ; T. OMATSU ; K. YAMAMOTO ; M. SAKAI ; M. FUJII.** Two-point-separation in super-resolution fluorescence microscope based on up-conversion fluorescence depletion technique. *Opt. Exp.,* 2003, vol. 24, 3271-3276
- **M.J. BOOTH ; T. WILSON.** Low-cost, frequency-domain, fluorescence lifetime confocal microscopy. *J. Microscopy,* 2004, vol. 214, 36
- **M. HEUPEL.** Fluoreszenzspektroskopie als neue Messmethode zur höchstempfindlichen Untersuchung transienter Zustände. *Dissertation,* 2001
- **C. EGGELING ; A. VOLKMER ; C.A.M. SEIDEL.** Molecular Photobleaching kinetics of Rhodamine6G under the conditions of one- and two-photon induced confocal fluorescence microscopy. *ChemPhysChem,* 2005, vol. 6, 791-804
- **G.J. BRAKENHOFF ; M. MÜLLER.** Improved axial resolution by point spread autocorrelation function imaging. *Opt. Lett.,* 1996, vol. 21, 1721-1723